# EUROPÄISCHE PATENTANMELDUNG

(11) **EP 1 681 201 A1**
(43) Veröffentlichungstag der Anmeldung: **19.07.2006**
(21) Anmeldenummer: 06000648.3
(22) Anmeldetag: 12.01.2006
(51) Int. Cl.: B60P 1/64, B60P 7/13

(54) **Kipp- und Wechselvorrichtung, insbesondere Abrollkippvorrichtung**

(30) Priorität: 12.01.2005 DE 102005001444
(71) Anmelder: Franz Xaver Meiller Fahrzeug- und Maschinenfabrik-GmbH & Co KG, 80997 München (DE)
(72) Erfinder: Bandilla, Peter, 82216 Frauenwasser (DE)
(74) Vertreter: Tiesmeyer, Johannes

(57) **Zusammenfassung**

Die Erfindung betrifft eine Kipp- und Wechselvorrichtung, insbesondere Abrollkippvorrichtung, zum Kippen und Wechseln von Behältern (2) auf einem Lastentransportfahrzeug, mit einem Schwenkarm (7) zum Aufladen eines Behälters (2) auf das Lastentransportfahrzeug bzw. zum Abladen des Behälters (2) von dem Lastentransportfahrzeug über wenigstens ein heckseitig am Fahrzeug vorgesehenes Behälter-Abstützelement (13), wobei der Schwenkarm (7) in seiner betriebsgemäßen Anordnung am Lastentransportfahrzeug um eine normalerweise horizontale Kippachse (9) relativ zum Fahrgestell des Lastentransportfahrzeugs in Fahrzeuglängsrichtung schwenkbar ist, um einen aufgeladenen Behälter (2) zwischen einer normalen Transportstellung und einer Kippposition auf dem Lastentransportfahrzeug zu bewegen. Die Kipp- und Wechselvorrichtung ist dadurch gekennzeichnet, dass der gesamte Schwenkarm (7) um die horizontale Kippachse (9) schwenkbar ist, um einen betreffenden Behälter (2) über das heckseitig am Fahrzeug vorgesehene Behälter-Abstützelement (13) betriebsmäßig auf das Fahrzeug zu ziehen oder vom Fahrzeug abzusetzen.

## Beschreibung

Die Erfindung betrifft eine Kipp- und Wechselvorrichtung, insbesondere Abrollkippvorrichtung, zum Kippen und Wechseln von Behältern auf einem Lastentransportfahrzeug, mit einem Schwenkarm zum Aufladen eines Behälters auf das Lastentransportfahrzeug bzw. zum Abladen des Behälters von dem Lastentransportfahrzeug über wenigstens ein heckseitig am Fahrzeug vorgesehenes Behälter-Abstützelement, wobei der Schwenkarm in seiner betriebsgemäßen Anordnung am Lastentransportfahrzeug um eine normalerweise horizontale Kippachse relativ zum Fahrgestell des Lastentransportfahrzeugs in Fahrzeuglängsrichtung schwenkbar ist, um einen aufgeladenen Behälter zwischen einer normalen Transportstellung und einer Kippposition auf dem Lastentransportfahrzeug zu bewegen.

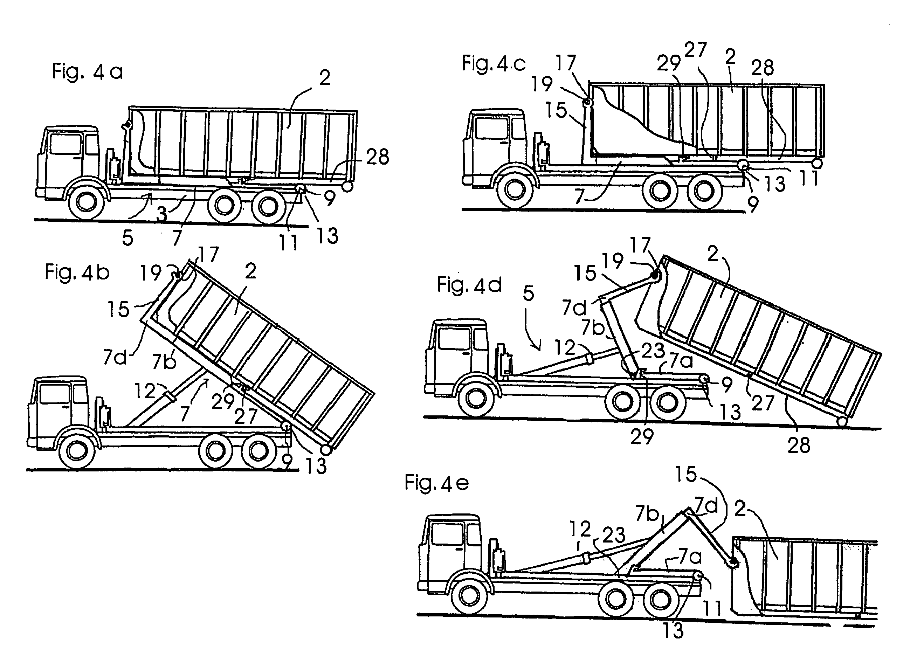

Abrollkippvorrichtungen der vorstehend genannten Art und damit ausgerüstete Abrollkipperfahrzeuge sind weit verbreitet im Einsatz. Zum Stand der Technik kann beispielsweise auf die DE 299 05 528 U1 verwiesen werden. In den Fig. 4a - 4e ist in vereinfachter Darstellung ein Abrollkipperfahrzeug nach dem Stand der Technik in verschiedenen Betriebszuständen gezeigt. In Fig. 4a ist das mit einer Abrollkippvorrichtung ausgerüstete Lastentransportfahrzeug mit einem in normaler Transportstellung aufgeladenen Wechselbehälter 2 dargestellt. Der Wechselbehälter 2 ist im vorderen Bereich teilweise aufgebrochen gezeigt, um die Darstellung zu vereinfachen. Die Abrollkippvorrichtung 5 ist auf dem Fahrzeuggrundrahmen 3 montiert und umfasst einen Schwenkarm 7, welcher um eine horizontale Kippachse 9 aus der Grundstellung gemäß Fig. 4a in eine Kippstellung gemäß Fig. 4b verschwenkt werden kann, etwa um Schüttgut aus dem Behälter 2 heckseitig auszukippen. Die Kippachse 9 erstreckt sich am Fahrzeugheck quer zur Längsrichtung des Abrollkipperfahrzeugs. Als Antrieb für den Kippvorgang dienen zwei Kolben-Zylinder-Aggregate 12, von denen z.B. in Fig. 4b nur eines wegen der gegenseitigen Überdeckung erkennbar ist. Die Kippachse 9 fällt mit der Drehachse 11 zweier Abstützrollen 13 für den Behälter 2 zusammen oder verläuft zumindest in unmittelbarer Nähe und parallel zu der Rollendrehachse 11.

An seinem von der Kippachse 9 entfernten Ende weist der Schwenkarm 7 einen abgewinkelten Hakenausleger 15 auf, dessen Haken 17 einen Aufnahmebügel 19 des Wechselbehälters 2 hintergreift, so dass der Wechselbehälter 2 an dem Schwenkarm 7 gehalten ist.

Der Schwenkarm 7 ist in der in Fig. 4e dargestellten Ladebetriebsart knickbar. Zu diesem Zweck ist der Schwenkarm 7 in einen hinteren, im Ladebetriebszustand von der Kippachse 9 im Wesentlichen horizontal nach vorne abstehenden und mit dem Grundrahmen 3 des Lastentransportfahrzeugs verriegelten hinteren Kipprahmen 7a und einen Knickausleger 7b untergliedert, der um eine parallel zur Kippachse 9 verlaufende Schwenkachse 23 schwenkbar ist, um den Wechselbehälter 2 über das Fahrzeugheck hinweg auf dem Boden abzusetzen oder einen hinter dem Fahrzeug befindlichen Wechselbehälter 2 auf den Fahrzeugaufbau aufzuladen. Fig. 4d zeigt eine Momentaufnahme eines solchen Abladevorgangs. In Fig. 4e ist der Wechselbehälter 2 fast vollständig abgeladen. Die Kolben-Zylinder-Aggregate 12 greifen an dem Knickausleger 7b an, so dass sie als Schwenkantrieb für den Knickausleger 7b im Ladebetriebszustand gemäß Fig. 4d benutzt werden können.

Werden die Kolbenstangen der Kolben-Zylinder-Aggregate 12 aus der in Fig. 4e dargestellten Stellung eingezogen, so gelangt der Wechselbehälter 2 über die in Fig. 4d gezeigte Stellung in die Aufsetzstellung gemäß Fig. 4c, wobei er zunächst mit seinen unteren Kufen 28 auf den Abstützrollen 13 aufsetzt und im weiteren Verlauf des Aufladevorgangs an den Abstützrollen 13 abrollen kann.

Um den Behälter 2 nun aus der Aufsetzstellung gemäß Fig. 4c in die Transportstellung gemäß Fig. 4a (und umgekehrt) verschieben zu können, ist der Schwenkarm im Knickauslegerbereich teleskopierbar ausgebildet. Wird also der vordere Abschnitt 7d des Knickauslegers 7b ausgehend von der Stellung gemäß Fig. 4c teleskopisch nach vorn ausgefahren, so wird der Wechselbehälter 2 auf dem Fahrzeugaufbau nach vorn verschoben, um die in Fig. 4a gezeigte Transportstellung einzunehmen. Dabei kommt eine jeweilige Verriegelungsöse 27, die an der Behälterunterseite seitlich neben der Behälterkufe 28 vorgesehen ist, mit dem Verriegelungsdorn 29 in Eingriff, welcher an dem hinteren Kipprahmenteil 7a des Schwenkarms 7 befestigt ist. Wird der Behälter 2 durch teleskopisches Einziehen des Abschnittes 7d des Schwenkarms 7 wieder zurückverschoben in die Stellung gemäß Fig. 4c, so kommt die Verriegelungsöse 27 automatisch von dem Verriegelungsdorn 29 frei und es kann der Ladebetriebszustand eingestellt werden, bei dem der Knickausleger 7b um die Schwenkachse 23 verschwenkbar ist.

Für den Kippbetrieb gemäß Fig. 4b ist der Knickausleger 7b in seiner horizontalen Grundstellung mit dem hinteren Kipprahmenteil 7a zu verriegeln, so dass die Knickfähigkeit des Schwenkarms 7 aufgehoben ist und der Schwenkarm insgesamt mit dem darauf befindlichen Wechselbehälter 2 um die Kippachse 9 am Fahrzeugheck kippbar ist. Ein Beispiel für eine solche Verriegelung mittels der Verriegelungselemente 27, 29 wurde vorstehend bereits angesprochen. Es finden sich im Stand der Technik jedoch weitere Beispiele für Verriegelungseinrichtungen, welche dazu dienen, den Knickausleger einer konventionellen Abrollkippvorrichtung in der Stellung der geradlinigen Verlängerung des hinteren Kipprahmens mit diesem zu verriegeln.

Der Erfindung liegt die Aufgabe zugrunde, eine Kipp- und Wechselvorrichtung, insbesondere Abrollkippvorrichtung, der eingangs genannten Art baulich zu vereinfachen.

Zur Lösung dieser Aufgabe wird gemäß Anspruch 1 vorgeschlagen, dass der gesamte Schwenkarm um die horizontale Kippachse schwenkbar ist, um einen betreffenden Behälter über das heckseitig am Fahrzeug vorgesehene Behälter-Abstützelement betriebsmäßig auf das Fahrzeug zu ziehen oder vom Fahrzeug abzusetzen.

Die Behälter-Abstützelemente sind vorzugsweise Abstützrollen, wie sie aus dem Stand der Technik bekannt sind. Es handelt sich dann bei dem Erfindungsgegenstand um eine Abrollkippvorrichtung, bei der ein betreffender Behälter beim Aufladen bzw. beim Abladen zeitweilig an den Abstützrollen abrollen bzw. abwälzen kann.

Erfindungsgemäß ist es nicht erforderlich und auch nicht vorgesehen, dass der Schwenkarm in der aus dem Stand der Technik bekannten Weise knickbar ist. Bei der Kipp- und Wechselvorrichtung nach der Erfindung erfolgt die Schwenkbewegung des Schwenkarms zum Ab- und Aufladen eines Behälters um dieselbe Schwenkachse wie die Kippbewegung beim Kippen des Behälters in der Kippbetriebsart. Abweichend von Abrollkippvorrichtungen nach dem Stand der Technik verläuft die Kippachse bei der Kipp- und Wechselvorrichtung nach der Erfindung nicht im hintersten Bereich des Fahrzeughecks in unmittelbarer Nähe zu der Drehachse der Abstützrollen, sondern ist auf dem Lastentransportfahrzeug deutlich weiter nach vorne versetzt. Dieser Versatz kann z.B. mehr als 1 m betragen. Dies bedeutet eine Abkehr von den bisherigen Konstruktionsprinzipien bei Abrollkippern. Die Anordnung des Schwenk-Kipplagers des Schwenkarms auf dem Lastentransportfahrzeug und die Dimensionierung des Schwenkarms auch unter Berücksichtigung der Dimensionen der damit zu handhabenden Behälter sind so gewählt, dass sowohl die Behälter-Kippbetriebsart als auch die Behälter-Ladebetriebsart der Kipp- und Wechselvorichtung nach der Erfindung zuverlässig funktionieren.

Auf das Knicklager der konventionellen Abrollkippvorrichtungen und auf die bekannten Verriegelungsmittel zur Verriegelung des Knickauslegers am hinteren Kipprahmen kann bei der Kipp- und Wechselvorrichtung nach der Erfindung vollständig verzichtet werden, was die Vorteile der einfacheren Bauweise, der Gewichtsersparnis und einer niedrigeren Bauweise der Kipp- und Wechselvorrichtung mit sich bringt. Die niedrigere Bauweise - von einem ggf. winkelig abstehenden Hakenausleger abgesehen - erlaubt die Aufnahme größerer Behälter auf dem Fahrzeug.

Der Schwenkarm hat einen von der Kippachse radial entfernten und mittels einer motorischen Antriebseinrichtung, insbesondere hydraulischen Antriebseinrichtung, teleskopisch ausfahrbaren bzw. einziehbaren Schwenkarmabschnitt mit einem Hakenausleger zur Ankopplung eines Behälters. Der vorzugsweise winkelig von dem Schwenkarmabschnitt abstehende Hakenausleger weist an seinem freien Ende ein Hakenelement zur lneingriffnahme einer Öse oder dgl. des betreffenden Behälters auf. Der Hakenausleger kann bedarfsweise entfernbar oder in eine Passivstellung verschwenkbar an dem Schwenkarmabschnitt angeordnet sein.

Gemäß der Erfindung ist es vorgesehen, dass der Schwenkarmabschnitt auch während der Schwenkbewegung des Schwenkarms bei daran angekoppeltem Behälter kraftgesteuert teleskopisch ausfahrbar bzw. einziehbar ist, um die Orientierung des Behälters relativ zum Lastentransportfahrzeug zu beeinflussen. Dies kann durch manuelle Steuerung der motorischen Antriebseinrichtung für den Teleskopierbetrieb erfolgen. Vorzugsweise ist der Schwenkarmabschnitt jedoch automatisch gesteuert in Abhängigkeit von der jeweiligen Schwenkstellung des Schwenkarms mittels der motorischen Antriebseinrichtung ausfahrbar bzw. einziehbar, um so den Behälter während des Kippbetriebs bzw. während des Ladebetriebs optimal relativ zum Fahrzeug zu orientieren, dies insbesondere im Hinblick auf die Fahrzeugstandsicherheit und auf den Energieaufwand beim Kippbetrieb bzw. beim Ladebetrieb der Kipp- und Wechselvorrichtung nach der Erfindung. Dabei soll der Behälter während des Kippbetriebs relativ zum Behälter-Abstützelement in seiner Längsrichtung verschiebbar sein, um den Teleskopierbewegungen des Schwenkarms zu folgen. In diesem Zusammenhang wird vorgeschlagen, dass es sich bei den Behälter-Abstützelementen vorzugsweise um heckseitige Abstützrollen handelt und dass eine Verriegelungseinrichtung zur Sicherung des Behälters am Fahrzeug vorgesehen ist, welche ein um die gemeinsame Drehachse der Abstützrollen drehbar montiertes Lagerteil und ein in Bezug auf die Drehachse zwischen einer Verriegelungsstellung und einer Freigabestellung axial an dem Lagerteil verschiebbares Verriegelungselement aufweist, welches in der Verriegelungsstellung ein auf den Abstützrollen abgestütztes Teil des Behälters gegen Abheben sichernd übergreift. Die Verriegelungseinrichtung kann grundsätzlich zum Einsatz kommen, wenn der Behälter an den Abstützrollen abgestützt ist und abgestützt bleiben soll, so z. B. im Kippbetrieb der Kipp- und Wechselvorrichtung. Dabei lässt die Verriegelungseinrichtung eine Längsverschiebung des Behälters relativ zu den Abstützrollen zu, nicht aber ein nennenswertes Abheben des Behälters von den Abstützrollen. Diese Längsverschiebbarkeit des Behälters nach Maßgabe der Teleskopierbewegungen des Schwenkarms kann insbesondere dazu benutzt werden, Behälter mit einem normalerweise relativ großen heckseitigen Überstand in eine steile Kippstellung zu überführen, ohne eine Kollision zwischen der hinteren Behälterunterkante und dem Boden zu verursachen.

Gemäß einer besonderen Variante der Erfindung ist das die Kippachse definierende Kipplager des Schwenkarms insbesondere in Fahrzeuglängsrichtung geführt verschiebbar an einem Rahmen der Kipp- und Wechselvorrichtung angeordnet, um die gemeinsame Schwenk- und Kippachse des Schwenkarms parallel zu verschieben. Auf diese Weise wird noch ein weiterer Bewegungsfreiheitsgrad des Schwenkarms erhalten, um die Orientierung eines betreffenden Behälters relativ zum Lastentransportfahrzeug bei der Handhabung des Behälters mit dem Schwenkarm zu beeinflussen oder um die Kipp- und Wechselvorrichtung schnell an unterschiedliche Behältergrößen anpassen zu können. Dabei sollte das Kipplager in bestimmten Stellungen, insbesondere Endstellungen seines Verschiebeweges arretierbar sein.

Ein Ausführungsbeispiel der Erfindung wird nachstehend unter Bezugnahme auf die Figuren näher erläutert.

Die Fig. 1 a - 1 d zeigen in einer vereinfachten schematischen Darstellung ein Lastentransportfahrzeug mit einer Kipp- und Wechselvorrichtung nach der Erfindung in verschiedenen Momentaufnahmen während der Durchführung der Kippbetriebsart.

Die Fig. 2a - 2d zeigen in einer den Fig. 1a - 1d ähnlichen Darstellung das Lastentransportfahrzeug aus Fig. 1a - 1d in verschiedenen Momentaufnahmen während der Durchführung der Ladebetriebsart.

Die Fig. 3a und 3b zeigen ein Detail des heckseitigen Bereichs des Lastentransportfahrzeugs.

Die Fig. 4a - 4e zeigen ein Lastentransportfahrzeug mit einer Kipp- und Wechselvorrichtung nach dem Stand der Technik in einer vereinfachten Darstellung. Auf die Fig. 4a - 4e zum Stand der Technik wurde bereits Bezug genommen.

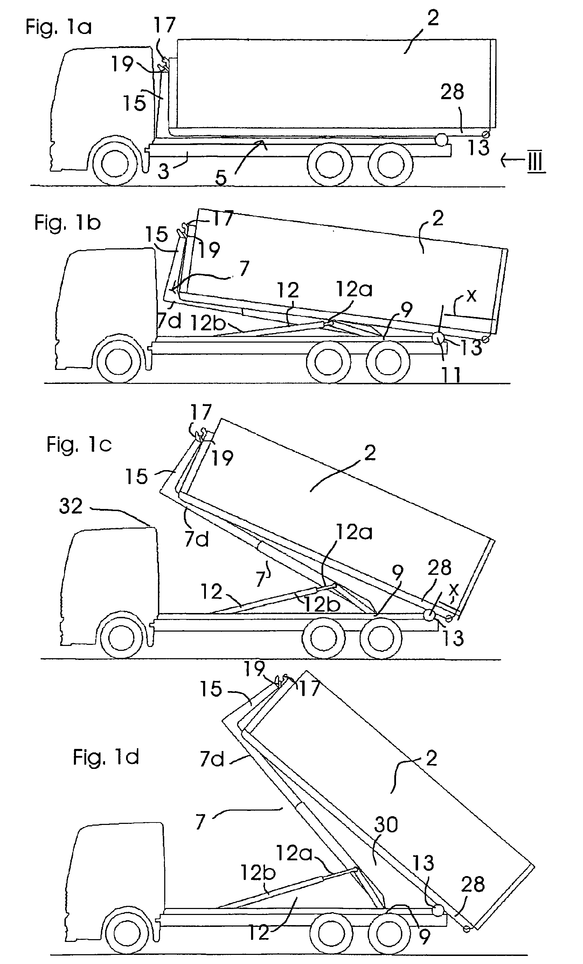

Soweit Elemente in den Fig. 1a - 2d konstruktiv oder funktional mit Elementen in den Fig. 4a - 4e im Wesentlichen korrespondieren, sind zur Kennzeichnung der Elemente gleiche Bezugszeichen verwendet worden.

Das Lastentransportfahrzeug gemäß Fig. 1a - 1d ist ein Abrollkipper mit einer als Abrollkippvorrichtung ausgebildeten Kipp- und Wechselvorrichtung nach der Erfindung. Auf dem Fahrzeuggrundrahmen 3 ist die Abrollkippvorrichtung 5 nach der Erfindung montiert. Sie umfasst den in den Fig. 1c und 1d besser erkennbaren Schwenkarm 7, welcher um die horizontal und quer zur Fahrzeuglängsrichtung verlaufende Kippachse 9 schwenkbar ist, etwa um einen Wechselbehälter 2 von der normalen Transportstellung gemäß Fig. 1a in die Kippstellung gemäß Fig. 1d zu kippen. Als Antriebsmittel für diesen Kippvorgang dienen zwei hydraulische Kolben-Zylinder-Aggregate 12, von denen in den Figuren jeweils eines erkennbar ist. Der Schwenkarm 7 weist einen teleskopisch ausfahrbaren und einziehbaren Schwenkarmabschnitt 7d auf, der an dem radial von der Kippachse 9 entfernten Schwenkarmende den Hakenausleger 15 aufweist. In der normalen Transportstellung gemäß Fig. 1 a steht der Hakenausleger 15 im Wesentlichen orthogonal und vertikal von dem Schwenkarm 7 nach oben ab. An seinem oberen Ende weist er einen Haken 17 auf, welcher zur Ankopplung des Behälters 2 die Behälteröse 19 hintergreift und somit den Behälter 2 an dessen frontseitiger Stirnseite mit dem Schwenkarm 7 verbindet. Am heckseitigen Ende des Lastentransportfahrzeugs ist der Behälter 2 mit seinen Standkufen 28 auf Abstützrollen 13 der Abrollkippvorrichtung 5 abgestützt. Dabei handelt es sich um zwei auf einer gemeinsamen Rollendrehachse 11 an dem Fahrzeugheck angeordnete Behälter-Abstützrollen 13.

Der in den Fig. 1a - 1 d illustrierte Kippvorgang des Behälters 2 aus der normalen Transportstellung gemäß Fig. 1a wird gestartet, indem die hydraulischen Kolben-Zylinder-Aggregate 12 aktiviert werden, um die Kolbenstangen 12a aus dem Zylinderrohr 12b auszufahren, so dass der Schwenkarm 7 um die Kippachse 9 nach oben verschwenkt wird. Beim Übergang von der Situation gemäß Fig. 1 b zur Situation gemäß Fig. 1 c ist der Endabschnitt 7d des Schwenkarms 7 um einen bestimmten Betrag teleskopisch ausgefahren worden, was daran zu erkennen ist, dass der in den Fig. 1 b und 1 c eingezeichnete Abstand X zwischen dem hinteren Behälterende und den Abstützrollen 13 kleiner geworden ist. Auf diese Weise kann der Behälterschwerpunkt bei gegebener Schwenkstellung um einen kleinen Betrag nach vorn verlegt werden, was der Fahrzeugstandsicherheit zugute kommt. Ferner kann auf diese Weise verhindert werden, dass der Behälter 2 während des Kippvorgangs mit seinem unteren hinteren Ende den Boden hinter dem Fahrzeug berührt.

Die teleskopische Verschiebung des Schwenkarmabschnitts 7d erfolgt mittels eines weiteren Kolben-Zylinder-Aggregates, welches in dem Schwenkarm 7 untergebracht - und in den Figuren nicht erkennbar ist.

In Fig. 1d hat der Behälter 2 eine Kippstellung erreicht, wie sie z.B. zum Ausschütten von Schüttgut geeignet ist. Der Behälter 2 ist dabei an seinem vorderen Ende mittels der Öse 19 an dem Haken 17 des Schwenkarms 7 gesichert und des Weiteren an den Abstützrollen 13 am Fahrzeug abgestützt. Es ist deutlich erkennbar, dass zwischen der Oberseite des Schwenkarms 7 und der Unterseite des Behälters 2 in der Kippstellung gemäß Fig. 1 d ein Freiraum 30 entstanden ist. Dieser Freiraum 30 resultiert daraus, dass die Kippachse 9 des Schwenkarmes gegenüber der Rollendrehachse 11 deutlich nach vorn versetzt ist.

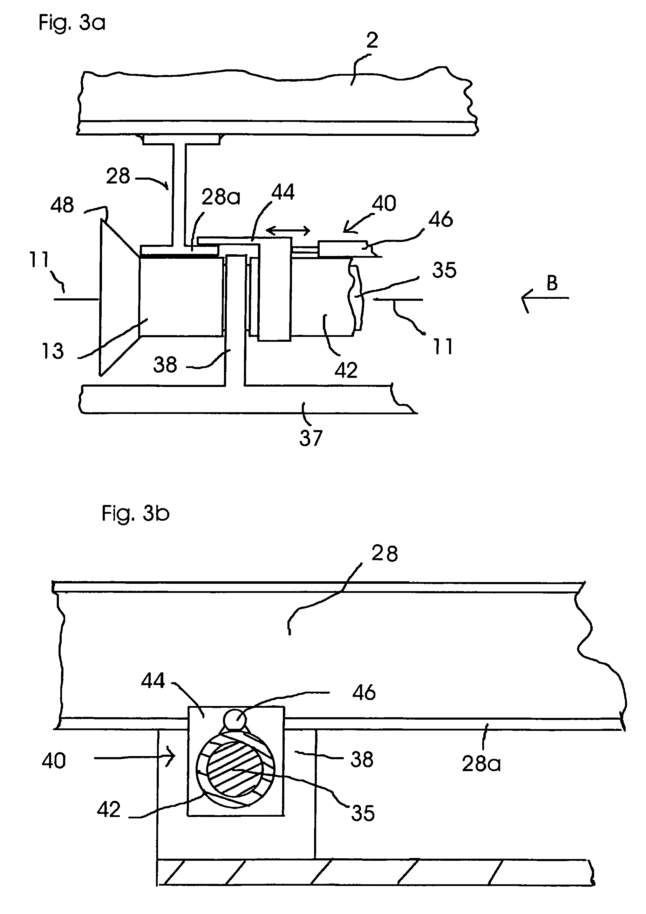

Um dem Behälter 2 auch bei dem Kippvorgang gemäß den Figuren 1a - 1 d seitlichen Halt zu geben, wird vorgeschlagen, dass die Abstützrollen 13 einen am Rollenumfang umlaufenden Flansch aufweisen, welcher die Behälterkufen 28 seitlich außen zumindest teilweise überlappt. Auf die Möglichkeit der Sicherung des Behälters 2 am Fahrzeug wird unter Bezugnahme auf die Fig. 3a und 3b noch eingegangen.

Um den Behälter aus der Kippstellung gemäß Fig. 1d wieder in die normale Transportstellung gemäß Fig. 1 a zu überführen, sind die Kolbenstangen 12a der Kolben-Zylinder-Aggregate 12 wieder in die betreffenden Zylinderrohre 12b einzuziehen, wobei ferner der Schwenkarmabschnitt 7d wieder teleskopisch ein wenig eingefahren wird, damit der Hakenausleger 15 ohne Kollision mit dem Führerhaus 32 wieder in die Stellung gemäß Fig. 1 a einrücken kann.

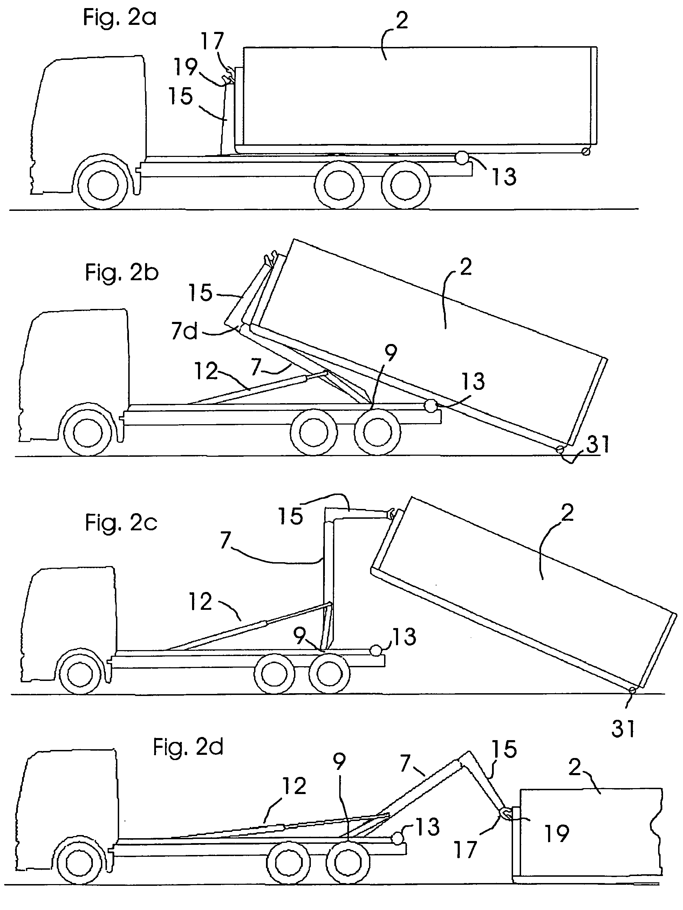

Fig. 2a zeigt das Abrollkipperfahrzeug im Ladebetrieb, und zwar im Behälter-Absetzbetrieb. Der vordere Schwenkarmabschnitt 7d ist aus der Normalstellung gemäß Fig. 1 a weitgehend vollständig teleskopisch eingezogen worden, wonach dann durch Aktivieren der Kolben-Zylinder-Aggregate 12 die Schwenkbewegung des Schwenkarms 7 ausgelöst wurde. Der Behälter 2 wird im Verlauf der Schwenkbewegung des Schwenkarms 7 verkippt und nach hinten verschoben, wobei er mit seinen Behälterkufen 28 an den Behälter-Abstützrollen 13 nach hinten abrollen kann, bis er mit seinen eigenen hinteren Standrollen 31 am Boden aufkommt. Im weiteren dann von den Behälter-Abstützrollen 13 abgehoben (Fig. 2c) und schließlich gemäß Fig. 2d hinter dem Fahrzeug abgesetzt. Dabei kann der Behälter 2 auf seinen eigenen Rollen 31 notwendige Ausgleichsbewegungen am Boden ausführen. Alternativ oder zusätzlich kann auch das Fahrzeug beim Absetzen des Behälters 2 um einen geringen Betrag nach vorne rollen.

Das Verschwenken des Schwenkarms 7 erfolgt in den Figuren 2a - 2d um dieselbe Achse 9 wie das Kippen in den Figuren 1a - 1d. Ein Knicken des Schwenkarms 7 für die Durchführung des Ladebetriebs gemäß den Fig. 2a - 2d ist nicht erforderlich und nicht vorgesehen. Daraus resultieren wesentliche bauliche Vereinfachungen der Kipp- und Wechselvorrichtung nach der Erfindung im Vergleich mit gattungsgemäßen Abrollkippvorrichtungen nach dem Stand der Technik. Nicht erkennbar in den Figuren 2a - 2d ist es, dass der Schwenkarm 7 auch während seines Verschwenkens um die Achse 9 bedarfsweise zur Ausführung von Teleskopierbewegungen des Armabschnittes 7d steuerbar ist.

Darauf hinzuweisen ist noch, dass auch bei der Kipp- und Wechselvorrichtung nach der Erfindung der Behälter in der normalen Fahrtstellung gemäß Fig. 1 a dieselbe liegende Orientierung hat wie in der Absetzstellung gemäß Fig. 2d. Dabei soll jedoch nicht eine Betriebsart grundsätzlich ausgeschlossen sein, gemäß welcher der in der normalen Transportstellung gemäß Fig. 1 a liegende Behälter 2 aufrecht hinter dem Fahrzeug mittels der erfindungsgemäßen Kipp- und Wechselvorrichtung abgestellt und aus einer solchen Stellung heraus wieder aufgeladen werden kann. Ein solcher Ladebetrieb kann insbesondere für die Handhabung von Silobehältern vorgesehen sein.

Fig. 3a zeigt in einer Ansicht entsprechend der in Fig. 1 a mit dem Pfeil III angedeuteten Blickrichtung ein die linke Abstützrolle 13 enthaltendes Detail des heckseitigen Bereichs des Lastentransportfahrzeugs. Fig. 3b zeigt eine Ansicht des Details aus der in Fig. 3a mit dem Pfeil B angedeuteten Blickrichtung.

Der Behälter 2 steht mit seiner Aufsetzkufe 28 auf der Abstützrolle 13 auf. Die Abstützrolle 13 ist auf der runden Kernstange 35 drehbar gelagert, so dass ein Verschieben des Behälters 2 in Längsrichtung der Kufen 28 zur Drehung der Abstützrollen 13 führt.

Die Kernstange 35 ist an dem rahmenfesten Element 37 fixiert. Rechts von der Kernstangenhalterung 38 in Fig. 3a befindet sich eine Verriegelungseinrichtung 40 zur Sicherung des Behälters 2 gegen Abheben von der Abstützrolle 13 im normalen Fahrbetrieb bzw. im Kippbetrieb gemäß den Fig. 1a - 1d. Die Verriegelungseinrichtung umfasst ein auf der Kernstange 35 um deren Achse 11 drehbar gelagertes Rohrelement 42 oder dergleichen. Auf dem Rohrelement 42 sitzt ein axial verschiebbarer Verriegelungsschuh 44, welcher in der in Fig. 3a gezeigten Verriegelungsstellung den unteren Flansch 28a der Behälterkufe 28 verriegelnd übergreift, so dass der Behälter nicht in nennenswertem Maße von der Abstützrolle 13 abheben kann. Zur Entriegelung kann das im Beispielsfall als hydraulisches Kolben-Zylinder-Aggregat 46 ausgebildete Antriebsmittel aktiviert werden, um den Verriegelungsschuh 44 von der Behälterkufe 28 abzuziehen, was z.B. für den Ladebetrieb gemäß den Fig. 2a - 2d erforderlich ist. Der Verriegelungsschuh 44 und das Antriebsmittel 46 sind drehfest mit dem Rohrelement 42 verbunden. Beim Kippen des Behälters 2 kann die Verriegelungseinrichtung die erforderliche Ausgleichsdrehbewegung um die Achse 11 der Abstützrollen 13 ausführen. Die Abstützrollen 13 und das Rohrelement 42 sind grundsätzlich unabhängig voneinander auf der Kernstange 35 drehbar gelagert.

Vorzugsweise übergreift der Verriegelungsschuh 44 den Kufenflansch 28a in der Verriegelungsstellung mit geringem Spiel, so dass eine Längsverschiebung der Kufen 28 und somit des Behälters 2 möglich bleibt.

Die für ein Ausführungsbeispiel der vorliegenden Erfindung konzipierte Verriegelungseinrichtung 40 kann auch bei konventionellen Abrollkippern Verwendung finden. Dabei würde das Rohrelement 42 dann vorzugsweise Teil des Kipplagers eines betreffenden Schwenkarmes sein. Der Art der in den Fig. 3a und 3b gezeigten Verriegelung kommt daher selbständige erfinderische Bedeutung zu.

ln Fig. 3a ist ferner zu erkennen, dass die Abstützrolle 13 seitlich außen einen Flanschbereich 48 mit vergrößertem Durchmesser aufweist. Dieser Flanschbereich 48 sichert die Behälterkufe 28 gegen seitliches Verrutschen. Da in symmetrischer Anordnung in Bezug auf eine vertikale Mittenebene des Lastentransportfahrzeugs eine weitere (nicht gezeigte) Stützrolle mit einem entsprechenden äußeren Flansch 48 vorhanden ist, ist der Behälter 2 somit gegen Verschieben nach links und gegen Verschieben nach rechts im Bereich der Abstützrollen 13 zuverlässig gesichert.

Es sei noch darauf hingewiesen, dass Vorspannmittel oder Verstellmittel vorgesehen sind, welche das Rohrelement 42 in eine definierte Drehwinkelstellung relativ zu der Kernstange 35 einstellen können, so dass nach Aufnahme eines Behälters 2 auf den Abstützrollen 13 insbesondere in der normalen Transportstellung der Verriegelungsvorgang zuverlässig erfolgen kann und der Verriegelungsschuh 44 hierzu vertikal oberhalb der Rollenachse 11 orientiert ist. Zum Verriegeln kann dann das Antriebsmittel 46 aktiviert werden, so dass der Verriegelungsschuh entsprechend verschoben wird, um den Flansch 28a der Behälterkufe 28 zu übergreifen. Jeder Rolle 13 kann eine jeweilige Verriegelungseinrichtung zugeordnet sein.

## Patentansprüche

1. Kipp- und Wechselvorrichtung, insbesondere Abrollkippvorrichtung, zum Kippen und Wechseln von Behältern (2) auf einem Lastentransportfahrzeug,
mit einem teleskopierbaren Schwenkarm (7) zum Aufladen eines Behälters (2) auf das Lastentransportfahrzeug bzw. zum Abladen des Behälters (2) von dem Lastentransportfahrzeug über wenigstens ein heckseitig am Fahrzeug vorgesehenes Behälter-Abstützelement (13), wobei der Schwenkarm (7) in seiner betriebsgemäßen Anordnung am Lastentransportfahrzeug um eine normalerweise horizontale Kippachse (9) relativ zum Fahrgestell des Lastentransportfahrzeugs in Fahrzeuglängsrichtung schwenkbar ist, um einen aufgeladenen Behälter (2) zwischen einer normalen Transportstellung und einer Kippposition auf dem Lastentransportfahrzeug zu bewegen,
**dadurch gekennzeichnet,**
**dass** der gesamte Schwenkarm (7) um die horizontale Kippachse (9) schwenkbar und dabei bedarfsweise teleskopierbar ist, um einen betreffenden Behälter (2) über das heckseitig am Fahrzeug vorgesehene Behälter-Abstützelement (13) betriebsmäßig auf das Fahrzeug zu ziehen oder vom Fahrzeug abzusetzen.

2. Kipp- und Wechselvorrichtung nach Anspruch 1, **dadurch gekennzeichnet, dass** der Schwenkarm (7) zur Realisierung seiner Teleskopierfunktion einen von der Kippachse (9) radial entfernten und teleskopisch ausfahrbaren bzw. einziehbaren Schwenkarmabschnitt (7d) mit einem Hakenausleger (15) zur Ankopplung eines Behälters (2) aufweist.

3. Kipp- und Wechselvorrichtung nach Anspruch 2, **dadurch gekennzeichnet, dass** der Schwenkarmabschnitt (7d) auch während der Schwenkbewegung des Schwenkarmes (7) bei daran angekoppeltem Behälter (2) teleskopisch ausfahrbar bzw. einziehbar ist, um die Orientierung des Behälters (2) relativ zum Lastentransportfahrzeug zu beeinflussen.

4. Kipp- und Wechselvorrichtung nach Anspruch 3, **dadurch gekennzeichnet, dass** der Schwenkarmabschnitt (7d) automatisch gesteuert in Abhängigkeit von der jeweiligen Schwenkstellung des Schwenkarmes (7) ausfahrbar bzw. einziehbar ist.

5. Kipp- und Wechselvorrichtung als Abrollkippvorrichtung nach einem der vorhergehenden Ansprüche, **dadurch gekennzeichnet, dass** das Behälter-Abstützelement (13) eine drehbar gelagerte Abstützrolle (13) mit einer zu Kippachse (9) parallelen Abstützrollen-Drehachse (11) ist und dass die Kippachse (9) des Schwenkarmes (7) und die Abstützrollen-Drehachse (11) um mehr als 0,5 m, insbesondere um mehr als 1 m voneinander beabstandet sind.

6. Kipp- und Wechselvorrichtung nach Anspruch 5, **dadurch gekennzeichnet, dass** die Kippachse (9) des Schwenkarmes (7) relativ zu der Abstützrollen-Drehachse (11) in Fahrzeuglängsrichtung nach vorn versetzt vorläuft.

7. Kipp- und Wechselvorrichtung nach einem der vorhergehenden Ansprüche, **dadurch gekennzeichnet, dass** das die Kippachse (9) definierende Kipplager des Schwenkarmes (7) in Fahrzeuglängsrichtung geführt verschiebbar an einem Rahmen der Kipp- und Wechselvorrichtung angeordnet ist, um die gemeinsame Schwenk- und Kippachse (9) des Schwenkarmes (7) parallel zu verschieben.

8. Kipp- und Wechselvorrichtung nach Anspruch 7, **dadurch gekennzeichnet, dass** das Kipplager in bestimmten Stellungen, insbesondere Endstellungen seines Verschiebeweges arretierbar ist.

9. Kipp- und Wechselvorrichtung nach dem Oberbegriff des Anspruchs 1 oder nach einem der vorhergehenden Ansprüche, **dadurch gekennzeichnet, dass** sie heckseitige Abstützrollen (13) als Abstützelemente aufweist und dass eine Verriegelungseinrichtung (40) zur Sicherung des Behälters (2) am Fahrzeug vorgesehen ist, welche ein um die gemeinsame Drehachse (11) der Abstützrollen (13) drehbar montiertes Lagerteil (42) und ein in Bezug auf die Drehachse (11) zwischen einer Verriegelungsstellung und einer Freigabestellung axial an dem Lagerteil (42) verschiebbares Verriegelungselement (44) aufweist, welches in der Verriegelungsstellung ein auf den Abstützrollen (13) abgestütztes Teil des Behälters gegen Abheben sichernd übergreift.

10. Kipp- und Wechselvorrichtung nach Anspruch 9, **dadurch gekennzeichnet, dass** an dem Lagerteil (42) ein Antriebsmittel (46) zur Verschiebung des Verriegelungselementes (44) befestigt ist.
